# EUROPEAN PATENT SPECIFICATION

(11) **EP 2 663 055 B1**
(45) Date of publication and mention of the grant of the patent: **28.08.2019**
(21) Application number: 13167304.8
(22) Date of filing: 10.05.2013
(51) Int. Cl.: H04L 29/08, H04L 29/06, G06F 3/0484, G06Q 50/00, G07F 17/32, G06Q 50/34

(54) **NETWORK SYSTEM WITH CHALLENGE MECHANISM AND METHOD OF OPERATION THEREOF**
NETZWERKSYSTEM MIT ABFRAGEMECHANISMUS UND VERFAHREN ZUM BETRIEB DAVON
SYSTÈME DE RÉSEAU AVEC MÉCANISME DE DÉFI ET SON PROCÉDÉ DE FONCTIONNEMENT

(30) Priority: 11.05.2012 US 201261646197 P
(43) Date of publication of application: 13.11.2013
(73) Proprietor: Samsung Electronics Co., Ltd., Gyeonggi-do 443-742 (KR)
(72) Inventor: Vasquez, Phillip, San Jose, CA 95112 (US); Hand, Anthony, San Jose, CA 95112 (US); Dudey, Gregory, San Jose, CA 95112 (US); Hayes, Robin, San Jose, CA 95112 (US); Pabla, Kuldip, San Jose, CA 95112 (US)
(74) Representative: HGF Limited

(56) References cited:
- US-A1- 2003 158 945
- US-A1- 2011 191 147
- US-B2- 7 249 157

## Description

### TECHNICAL FIELD

An embodiment of the present invention relates generally to a network system, and more particularly to a system for a network challenge.

### BACKGROUND

Modern consumer and industrial electronics, especially devices such as graphical display systems, televisions, projectors, cellular phones, tablet computers, notebook computers, computer terminals, portable digital assistants, and combination devices, are providing increasing levels of functionality to support modern life including network services. Research and development in the existing technologies can take a myriad of different directions.

Many television program providers, cyber sports providers, and social network providers, support smart TVs, smartphones, tablets, PCs, digital photo frames, etc. Applications and platforms commonly use automated content recognition (ACR) to "listen" for audio from a source device to identify which program is playing, then cross reference the audio signature from a cloud-based database.

Separately, gaming has become more of a social leisure activity. Gaming machines are typically played by a single player-user. The player-user played against the machine, and games played on the machine were not affected by play on other machines. Gaming machines that provide players awards are well known. These gaming machines generally require a player to place a wager to activate a play of the primary game.

These social leisure activities are currently separated both by location and interest or target group. Based on current products and services, these activities continue to be separate and disparate. Social, consumer, technology, and business goals have developed these activities independently.

Thus, a need still remains for a network system with challenge mechanism. In view of the ever-increasing commercial competitive pressures, along with growing consumer expectations and the diminishing opportunities for meaningful product differentiation in the marketplace, it is increasingly critical that answers be found to these problems. Additionally, the need to reduce costs, improve efficiencies and performance, and meet competitive pressures adds an even greater urgency to the critical necessity for finding answers to these problems.

Solutions to these problems have been long sought but prior developments have not taught or suggested any solutions and, thus, solutions to these problems have long eluded those skilled in the art.

US-7249157-B2 discloses an enterprise wide electronic commerce system which allows trading partners to act as participants in a complex trading process. Participants communicate with one another by joining conversations that are hosted in a collaboration space and managed by a collaboration hub. In this manner, the enterprise workflow may have an effect on, or be affected by, local workflows. The invention provides an open market collaboration system for enterprise wide electronic commerce. In one embodiment a collaboration system allows the exchange of data between participants in an electronic commerce environment, comprising a collaboration hub for the transfer of data between participants, a collaboration space defining the rules governing said transfer of data and the role of said participants, and a hub transport that allows a participant to send and receive data from the collaboration hub in accordance with the definitions of the collaboration space.

US 2011/0191147 A1 relates to methods and systems for internet-based network shareholder communication, voting, and the creation of regulatory compliant shareholder proposals. It discloses systems, methods and software applications for conducting network shareholder voting actions and shareholder proposals by utilizing a server data base. A web site enables any member shareholder in a network of shareholder members to initiate a vote and allow all network members of the same stock, the option to vote for, against, or to abstain from the said subject voting process. All members of the network are updated about the progress of voting results as they occur. The system also provides means for the origination of a regulatory compliant corporate proposal while providing regulatory compliance information and a time keeping and notification function to assist in compliance procedures.

### SUMMARY

An embodiment of the present invention provides a device comprising: a display interface configured to create a collaborative space, wherein at least one user accesses, through the collaborative space, a first server providing a sports event and a second server providing a social network service; a control unit, coupled to the display interface, configured to: authenticate, through the second server, a login for the at least one user in the collaborative space; display a challenge related to the sports event provided from the first server in the collaborative space; receive at least one vote related to the challenge from the at least one user in the collaborative space; and output a result of the challenge based on the at least one vote.

An embodiment of the present invention provides a method of operation of a device comprising: creating a collaborative space, wherein at least one user accesses, through the collaborative space, a first server providing a sports event and a second server providing a social network service; authenticating, through the second server, using a control unit, a login for the at least one user in the collaborative space; displaying a challenge related to the sports event provided from the first server in the collaborative space; receiving at least one vote related to the challenge from the at least one user in the collaborative space; and outputting a result of the challenge based on the at least one vote.

Certain embodiments of the invention have other steps or elements in addition to or in place of those mentioned above. The steps or elements will become apparent to those skilled in the art from a reading of the following detailed description when taken with reference to the accompanying drawings.

### BRIEF DESCRIPTION OF THE DRAWINGS

FIG. 1 is a network system with image conversion mechanism in an embodiment of the present invention.
FIG. 2 is a block diagram of a network system in an embodiment of the invention.
FIG. 3 a block diagram for a video chat function of the network system in an embodiment of the invention.
FIG. 4 is a block diagram for "group wall", betting, and polling functions of the network system in an embodiment of the invention.
FIG. 5 is a block diagram for a statistics or stats, and fantasy sports functions of the network system in an embodiment of the invention.
FIG. 6 is a block diagram for social network integration and reaction capture functions of the network system in an embodiment of the invention.
FIG. 7 is a block diagram for a social check-in (attendance, bets) function of the network system in an embodiment of the invention.
FIG. 8 is a block diagram for a reaction capture function of the network system in an embodiment of the invention.
FIG. 9 is a block diagram for a buddy creation function of the network system in an embodiment of the invention.
FIG. 10 is a high level block diagram for an information processing system of the network system in an embodiment of the invention.
FIG. 11 is a cloud computing system for the network system in an embodiment of the invention
FIG. 12 is an exemplary block diagram of the display system.
FIG. 13 is a flow chart of a method of operation of a network system in an embodiment of the present invention.

### DETALIED DESCRIPTION

An embodiment of the present invention includes sporting event network, cyber sports network, social network service, sports experience network, "group wall" or "skybox" features providing a holistic multi-device experience that crosses device types like no other, including smart TVs, smartphones, tablets, PCs, digital photo frames, etc. Further automated "smart group" functionality is provided when multiple users are in the same home or different location. Additionally, support is provided for non-traditional hardware and software services, such as a device's video camera, location data, accelerometer sensor data, and so on.

The following embodiments are described in sufficient detail to enable those skilled in the art to make and use the invention. It is to be understood that other embodiments would be evident based on the present disclosure, and that system, process, or mechanical changes may be made without departing from the scope of an embodiment of the present invention.

In the following description, numerous specific details are given to provide a thorough understanding of the invention. However, it will be apparent that the invention may be practiced without these specific details. In order to avoid obscuring an embodiment of the present invention, some well-known circuits, system configurations, and process steps are not disclosed in detail.

The drawings showing embodiments of the system are semi-diagrammatic, and not to scale and, particularly, some of the dimensions are for the clarity of presentation and are shown exaggerated in the drawing figures. Similarly, although the views in the drawings for ease of description generally show similar orientations, this depiction in the figures is arbitrary for the most part. Generally, the invention can be operated in any orientation. The embodiments have been numbered first embodiment, second embodiment, etc. as a matter of descriptive convenience and are not intended to have any other significance or provide limitations for an embodiment of the present invention.

One skilled in the art would appreciate that the format with which image information is expressed is not critical to some embodiments of the invention. For example, in some embodiments, image information is presented in the format of (X, Y); where X and Y are two coordinates that define the location of a pixel in an image.

In an alternative embodiment, three-dimensional image information is presented by a format of (X, Y, Z) with related information for color of the pixel. In a further embodiment of the present invention, the three-dimensional image information also includes an intensity or brightness element.

The term "image" referred to herein can include a two-dimensional image, three-dimensional image, video frame, a computer file representation, an image from a camera, a video frame, or a combination thereof. For example, the image can be a machine readable digital file, a physical photograph, a digital photograph, a motion picture frame, a video frame, an x-ray image, a scanned image, or a combination thereof.

The term "module" referred to herein can include software, hardware, or a combination thereof in an embodiment of the present invention in accordance with the context in which the term is used. For example, the software can be machine code, firmware, embedded code, and application software. Also for example, the hardware can be circuitry, processor, computer, integrated circuit, integrated circuit cores, a pressure sensor, an inertial sensor, a microelectromechanical system (MEMS), passive devices, or a combination thereof.

Current applications and platforms commonly use automated content recognition (ACR) to "listen" for audio from a source device to identify which program is playing, then cross reference the audio signature from a cloud-based database. Such services do not offer automated or smart functionality particularly with multiple users. Additionally, current services do not support non-traditional hardware and software services, such as a device's video camera, location data, accelerometer sensor data, and so on. Further automated content recognition (ACR) can be based on video frames, with or without audio, turning each video frame into an RGB profile that is matched with a programming database of RGB profiles.

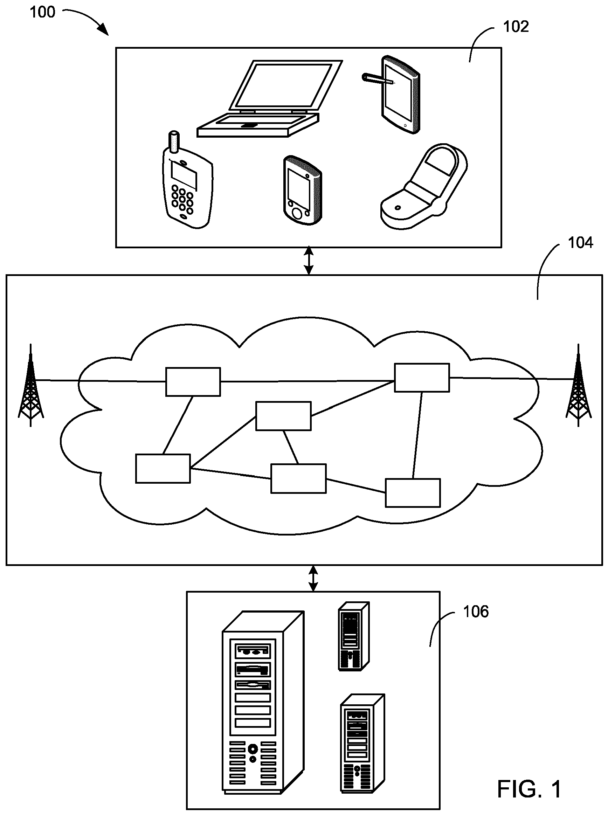

Referring now to FIG. 1, therein is shown a network system 100 with challenge mechanism in an embodiment of the present invention. The network system 100 includes a first device 102, such as a client or a server, connected to a second device 106, such as a client or server. The first device 102 can communicate with the second device 106 with a communication path 104, such as a wireless or wired network.

For example, the first device 102 can be of any of a variety of display devices, such as a cellular phone, personal digital assistant, a notebook computer, a liquid crystal display (LCD) system, a light emitting diode (LED) system, or other multi-functional display or entertainment device. The first device 102 can couple, either directly or indirectly, to the communication path 104 to communicate with the second device 106 or can be a stand-alone device.

For illustrative purposes, the network system 100 is described with the first device 102 as a display device, although it is understood that the first device 102 can be different types of devices. For example, the first device 102 can also be a device for presenting images or a multi-media presentation. A multi-media presentation can be a presentation including sound, a sequence of streaming images or a video feed, or a combination thereof. As an example, the first device 102 can be a high definition television, a three dimensional television, a computer monitor, a personal digital assistant, a cellular phone, or a multi-media set.

The second device 106 can be any of a variety of centralized or decentralized computing devices, or video transmission devices. For example, the second device 106 can be a multimedia computer, a laptop computer, a desktop computer, a video game console, grid-computing resources, a virtualized computer resource, cloud computing resource, routers, switches, peer-to-peer distributed computing devices, a media playback device, a Digital Video Disk (DVD) player, a three-dimension enabled DVD player, a recording device, such as a camera or video camera, or a combination thereof. In another example, the second device 106 can be a signal receiver for receiving broadcast or live stream signals, such as a television receiver, a cable box, a satellite dish receiver, or a web enabled device.

The second device 106 can be centralized in a single room, distributed across different rooms, distributed across different geographical locations, embedded within a telecommunications network. The second device 106 can couple with the communication path 104 to communicate with the first device 102.

For illustrative purposes, the network system 100 is described with the second device 106 as a computing device, although it is understood that the second device 106 can be different types of devices. Also for illustrative purposes, the network system 100 is shown with the second device 106 and the first device 102 as end points of the communication path 104, although it is understood that the network system 100 can have a different partition between the first device 102, the second device 106, and the communication path 104. For example, the first device 102, the second device 106, or a combination thereof can also function as part of the communication path 104.

For illustrative purposes, the network system 100 is shown with the first device 102 as a client device, although it is understood that the network system 100 can have the first device 102 as a different type of device. For example, the first device 102 can be a server having a display interface.

Also for illustrative purposes, the network system 100 is shown with the second device 106 as a server, although it is understood that the network system 100 can have the second device 106 as a different type of device. For example, the second device 106 can be a client device.

For brevity of description in this embodiment of the present invention, the first device 102 will be described as a client device and the second device 106 will be described as a server device. The embodiment of the present invention is not limited to this selection for the type of devices. The selection is an example of an embodiment of the present invention.

The communication path 104 can span and represent a variety of networks. For example, the communication path 104 can include wireless communication, wired communication, optical, ultrasonic, or the combination thereof. Satellite communication, cellular communication, Bluetooth, Infrared Data Association standard (lrDA), wireless fidelity (WiFi), and worldwide interoperability for microwave access (WiMAX) are examples of wireless communication that can be included in the communication path 104. Ethernet, digital subscriber line (DSL), fiber to the home (FTTH), and plain old telephone service (POTS) are examples of wired communication that can be included in the communication path 104. Further, the communication path 104 can traverse a number of network topologies and distances. For example, the communication path 104 can include direct connection, personal area network (PAN), local area network (LAN), metropolitan area network (MAN), wide area network (WAN), or a combination thereof.

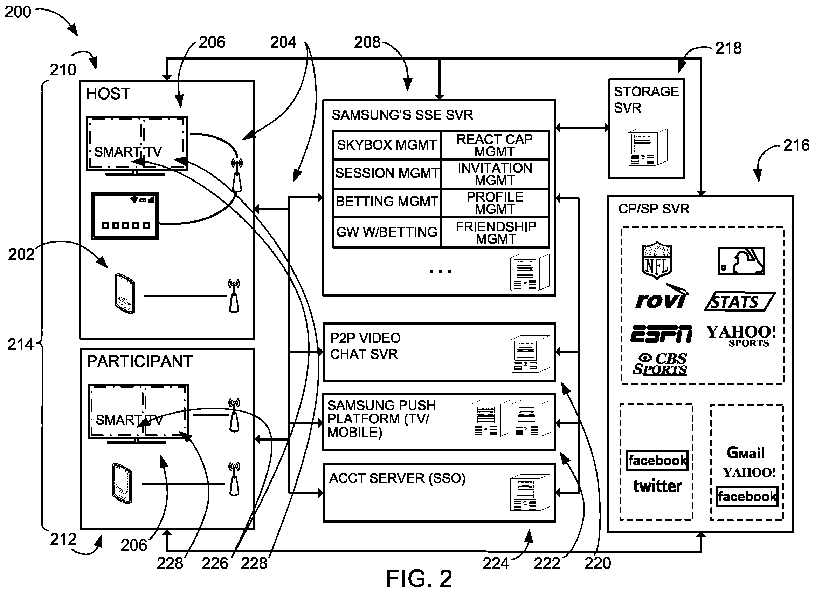

Referring now to FIG. 2, therein is shown a block diagram of a network system 200 in an embodiment of the invention. The network system 200 can provide a challenge or bet over the communication path 104 of FIG. 1. The network system 200 facilitates betting or challenging during social viewing of TV content. The network system 200 preferably provides a mechanism to turn a casual talk, casual chat, "trash talk", or combination thereof into a challenge or bet while viewing a program such as watching a television (TV) show with family, friends, co-viewers, or combination thereof.

The network system 200 further provides a method for collaboratively sharing features such as communication, challenges, bets, or combination thereof, among devices with distributed viewing of common programming such as a distributed sporting event, social communications context, or combination thereof. This requires the development of several components which must work together across the network system 200.

The several components can include a portable device 202 such as the first device 102 of FIG. 1, a network 204 such as the communication path 104 of FIG. 1, or an audio-visual device 206 such as the second device 106 or the first device 102 of FIG. 1. Further, the network system 200 can preferably include a challenge mechanism provided by or integrated within the audio-visual device 206, an experience server 208, an auxiliary device (not shown) such as a set top box, portable device hardware accessory, portable device application, or combination thereof.

An example of one scenario is a group of friends such as Group A 210 at one of the Group A 210 homes can be viewing a sporting event on an audio-visual device 206, such as a projection screen, television, smart television, or any other display device. The audio-visual device 206 can provide a visual display, an audio output, or combination thereof. Each of the group can have a portable device 202 including handheld devices such as a smartphone, a smart tablet, cell phone, tablet computer, network music player, internet device, or combination thereof.

The audio-visual device 206 and portable devices 202 are all connected to each other and the Internet with the network 204, such as a cellular network, a wireless WiFi router, a standard wired router or combination thereof. The audio-visual device 206 receives the sporting event broadcast, such as direct from the broadcaster, over the Internet, over-the-air, via cable, or combination thereof.

Further to the example, at the same time in a second location, such as across town or across the world, one or more additional groups of friends such as Group B 212 to Group N (not shown) can watch the same program such as a live game and are connected to the audio-visual device 206 at the one of the Group A 210 homes through the network 204, which preferably includes a proprietary social network such as a proprietary network for the purpose of enjoying sporting events.

A "group of friends" such as Group A 210, Group B 212 - Group N, can be defined as one or more persons sharing a program such as a sporting event at the same location, such as a single person stuck at the office with only his laptop computer, two friends sharing a smart tablet at a cafe, or a handful of friends at a sports bar each with their own smartphone.

Additionally, two or more of the "groups of friends" may be connected into a single common virtual collaborative space called a "skybox" 214, where the users can act as if they were co-located to share messages, live video feeds, clips from member devices, interactive games and polls, or combination thereof. The "skybox" 214 or collaborative space 214 can preferably include one or more of the audio-visual device 206, portable devices 202, or combination thereof, connected to each other with the network 204. The one or more audio-visual device 206 in the "skybox" 214 preferably displays common programming as well as a display of posted challenges or bets.

For example, within the context of a sporting event social network, the "skybox" 214 features have been designed to work with multiple groups of users connected within the "skybox" or collaborative space 214, where each group can support multiple heterogenous types of devices connected to each other and the social networking service in the cloud in multiple ways. Even so, the service will provide a compelling user experience even if one of the skybox's groups has only one person (e.g., on a smartphone), or the "skybox" 214 only has one group (e.g., with only one tablet present in the group).

Further, the proprietary social network may contain many other "skyboxes" 214, such as thousands or millions, at any time, and can include a method or means for a user to temporarily exit or extend beyond his or her "skybox" 214. A user can exit or extend in order to interact with other or all of the "skyboxes" 214, other "groups of friends" who are also enjoying the same event on another of the audio-visual device 106, or other larger groupings including sport-specific, market-specific, international content, collaboration areas, or combination thereof.

Yet further, the other of the "skybox" 214 could also be viewing a different event or program than the "skybox" 214 of the aforementioned user, who can also exit or extend to interact with other events or programs. Any of the "skybox" 214 can view the same program or event, although a common program 226 such as a sporting event, a popular television program, a movie, a social communications context, any video presentation, any audio presentation, or combination thereof, will preferably be viewed within any one of the "skybox" 214.

A "group wall" 228 is preferably a visual display of at least the bets or challenges associated with the common event or program and can be displayed on any of the audio-visual devices 206 preferably associated with one "skybox" 214. The "group wall" 228 can be displayed as an overlay, ticker, banner, pop-up, partial screen, full screen, or combination thereof. Updates of the "group wall" 228 can be user configurable including real-time, incremental update, update on change, update on demand, or combination thereof.

In an embodiment, the Samsung Sports Experience (SSE), such as a television (TV) application, features a minimized picture-in-picture view (PIP view) of a currently active TV channel. This provides an uninterrupted view of programming, such as the currently active TV channel, that a user has selected before accessing a smart hub or the SSE TV application. The PIP view can be available across all SSE TV application screens anytime an active channel is detected. The PIP view is smooth and avoids temporary blank screens such as re-flash when changing screens or the PIP view is resized. The SSE TV application supports a TV camera and speakers for video chat capture and audio mixing. Audio output through the TV speakers can support a blend or mix of TV broadcast content or over-the top-content (OTT content) with video chat content.

In another embodiment of the invention, multi-screen capability is provided to enhance the Samsung Sports Experience through at least a second screen including paired modes with a synchronized experience across multiple devices and rooms such as living rooms.

The user can "bet" on any message that's been posted to the group wall. A bet is really a challenge and may or may not have a material (monetary) value. In an embodiment everyone in the "skybox" 214 can see the bet, vote for or against the bet, such as take sides. The members may resolve who won on their own, but the challenge mechanism may provide one or more mechanisms so the members could select the resolution of the bet that is in whose favor the outcome resulted.

The system may also track how members are doing on their bets over the course of the event. The important thing for the bet is that users stake out their claims, such as which team will win, by how much, whether certain players make good plays, or combination thereof. Some bets, such as who wins & the score may be resolved automatically by the system as the data may come through the audio-visual source or a data source partner.

The user can bet or challenge on anything including score, time to reach a limit, specific action, particular event, elapsed time, total time, accumulated quantity, or combination thereof. The bet or the challenge is at least provided to be published on all of the audio-visual devices in the "skybox" 214. The bet or the challenge can also be provided to be published on a network server 216 such as a Social Network Service (SNS) including FaceBook®, Twitter®, or combination thereof.

The network system 200 can provide access to vendors for settlement of the bet or challenge. For example, the network system 200 can provide the loser of the bet or challenge access to vendors including retailers of pizza, beer, etc. The vendors can be selected based on the winner's location as it may already be known. Thus, the network system 200 can make it easy with one or more entries, such as clicks of a mouse or other input device, to buy pizza, add a tip, and deliver to the winner.

Any of the users may optionally share their bet or challenge with other network servers 216 including a Social Network Service provider (SP), a Cyber Sports provider (CP), a Cyber Sports Network, the experience server 208, a proprietary network such as Samsung Sports Experience (SSE), or combination thereof. The experience server 208 can provide the proprietary network and services such as the Samsung Sports Experience and can connect to a storage server 218, chat server 220, push server 222 such as a Samsung Push Platform, an account server 224 such as a single sign-on (SSO) server, or combination thereof.

The account server 224 can authenticate the user or the member of the group for one or more servers, providers, services, or combination thereof. The users or members of the group can access the Samsung Sports Experience functions including the "skybox" 214 "group wall" preferably based on authentication, validation, or verification of a login for the user or member of the group.

Other users with the Social Network Service, the Cyber Sports Network, the experience server 208, or the Samsung Sports Experience network can comment, like, or act upon the shared bet or challenge. The responses or actions, comments, like, or actions upon, from the other users can be provided or brought back to the "skybox" 214 that originated the shared bet or challenge. Thus any users in the skybox can view the responses or actions.

A user may view, search, or select comments such as go back into text of a "skybox" 214 chat history and convert a comment into a bet or challenge. Bets or challenges can also be sponsored by an advertiser such as Nike Bet®.

In another embodiment of the present invention, the network system 200 can provide a simultaneous viewing experience and interaction through a "skybox" 214, "group wall", or combination thereof, for a group of users including users who can be geographically separated and are not required to be co-located. For example, the group of users can gather at a location or locations to view a popular program such as "True Blood", "The Oscars®" awards ceremony, or the season finale of "American Idol" using recording devices or services to view programs at a time other than originally broadcast.

All functions described herein are preferably provided by a Samsung Sports Experience application, which can be executed by the portable device 202 such as a tablet, smart phone, computer, network device, or combination thereof, or the audio-visual device 206 such as a television, computer, projection screen, other display device, or combination thereof.

The Samsung Sports Experience can include a Samsung Sports Experience server (SSE Server), television (TV), or tablet computer (Tablet) with Samsung Sports Experience applications for supporting the "skybox" 214 provides:
1) what "Skybox Management" in the SSE server does and what is included in the request message when SSE receives a request message from the TV or Tablet for creating the skybox,
2) what each of "Invitation Management' and "Session Management" in the SSE server does in detail when the SSE receives an invite message for inviting friends and session initiation message,
3) how the SSE server pushes or transfers a text chat, video or audio message to the TV or Tablet after multiple session connection, and
4) how to technically display or show information in "skybox" or on screen in TV or Tablet side, not conceptually, while watching a TV show with a group, such as family, friends, or co-viewers. In other words, how the TV or Tablet processes the message received from the SSE server.

An embodiment provides an SSE TV application that can be downloaded to a smart TV via a smart hub market place. Users can access the smart hub market place via a smart hub screen on a TV. The SSE application can be searched via a built in search feature. Once downloaded and installed, the SSE application can be displayed as an icon on the smart hub main screen. A TV remote control or a paired mobile device can be used to launch and control the SSE TV application.

In another embodiment, the SSE application can be downloaded to a mobile device from an online application store. The mobile application (SSE mobile application) is optimized for mobile device use. The SSE mobile application can support a similar features set to the Smart TV application.

The SSE application can support two primary pairing modes. In a host pairing mode, the portable device 202 can discover and be paired to the audio-visual device 206 such as a smart TV. Pairing enables control of the TV functions and features, such as change channel, adjust volume, mute, as well as control of the SSE application running on the smart TV.

In a guest pairing mode, the mobile SSE application used by SSE event participants who are in the same room as the smart TV and running the SSE application, can share their mobile screens to the TV. Users have to be guests in the same SSE event as the one active on the TV and have guest paired their device to the TV.

In yet another embodiment, the SSE provides hosts with an event creation privilege. An events area grouping function allows hosts, which are users who create the event, to create events and invite their friends to jointly view linear or streamed TV content.

The SSE events can select "themes" to feature a user interface (UI) specific to a game, league, or team. Hosts will be able to choose from a variety of available "themes" allowing personalization of the event. The "theme" can contain dynamic components to align with the active game or sports event being watched in the SSE event. These dynamic components can include team, league, or sport specific logos or branding elements. All SSE events can feature a default configuration with a "theme" that adjusts dynamically according to the game or event selected for the SSE event.

The "theme" applies throughout the event and is visible to all event participants on all of the application screens on the TV as well as the mobile devices. The event "theme" chosen by the host can apply to all guests and participants. Other SSE events can be accessible outside of scheduled event viewing times.

Broadcast events on TV typically feature dynamic user interface (UI) animations and screen transitions supported by various graphical elements and sound effects. The SSE provides an equivalent level of dynamic screen animations and UI effects, particularly during startup of the application and when users transition from screen to screen. Audio effects support a dynamic UI. Transitions between SSE Screens are fluid and feature smooth animations.

Hosts can choose events from an electronic game electronic program guide (EPG) like feature such as a Games List on the SSE application home screen. The events listed in the games list include all games or sports supported by the SSE application and can feature a "recommended for user" section based on past event selections and viewing habits including team, series, or league recommendations. The games list may include sponsored events. Once the host has chosen the event from the games list, the host can progress to the event invitation process.

Events can trigger invites to the host's friends or buddies. Events have a title, event details, and a start and end time. The event timeframe does not affect the SSE events availability and accessibility. Future and current events are open for participants and invitees to join at anytime though past events can be purged from the system after a configuration time such as 2 days. The events determine the dynamic UI elements based on title, details and times.

Invitees who do not have a SSE account will receive notification such as an email with the event details (such as game details, time, or channel) and instructions for downloading and installing SSE on their supported device(s). Aside from the link to download the application, the invite features can link to more information about SSE, an option to add invite to calendar, or option to accept or RSVP.

To simplify joining an event for invitees who don't have an ID, SSE can provide a temporary guest account login. The temporary login can allow participation in an SSE event but users of a temporary login might not be authorized to store an SSE profile. The game details (such as teams, time, time zone, channel, or host name) can be included in the invite and can be pulled from the game list function in SSE.

Invites can be created for a single, multiple, or repeating (standing) events. Invitees, who are existing SSE users, can receive an email invite to their personal inbox and can receive an SSE notification. Users can receive multiple invites for the same or different games at a time. Invitations delivered directly to SSE are represented as individual event objects showing event name, host name, game info, start/end time, number of invitees or number of guests in event. The event objects are displayed in the SSE application. Invitations can be re-used for future events with either the same or different invitee list.

The SSE TV and SSE mobile applications can collect a range of usage data. The data can be collected to facilitate the analysis of usage patterns, rank features, discover usability problems, or monitor quality of service. All screens and screen actions can be tagged to collect data. Users can acknowledge and can opt-in or opt-out of data collection. Collected data is anonymized and stored securely.

For example, data elements collected can include: Unique User ID, Device (such as Type, Model, Platform, OS version), Application Version, Connection Type (such as Wifi, Cellular), network provider, Geo location, Application Start/Stop Timestamp, Application Failure, Application Foreground/Background, Event Browsing/Selection, Event Details (Event name, number of invitees, invitee identification), Session Time/Duration, User Actions/Click path, Device Pairing, Screen Sharing, or combination thereof.

It has been discovered that the experience server 208 or an application providing the Samsung Sports Experience of the network system 200 provides a holistic multi-device experience for simultaneous viewing of a program.

Further, it has been discovered that more than one group such as a "skybox" 214 may share a "group wall" providing a proprietary multi-device network that crosses device types for a simultaneous viewing and interaction experience.

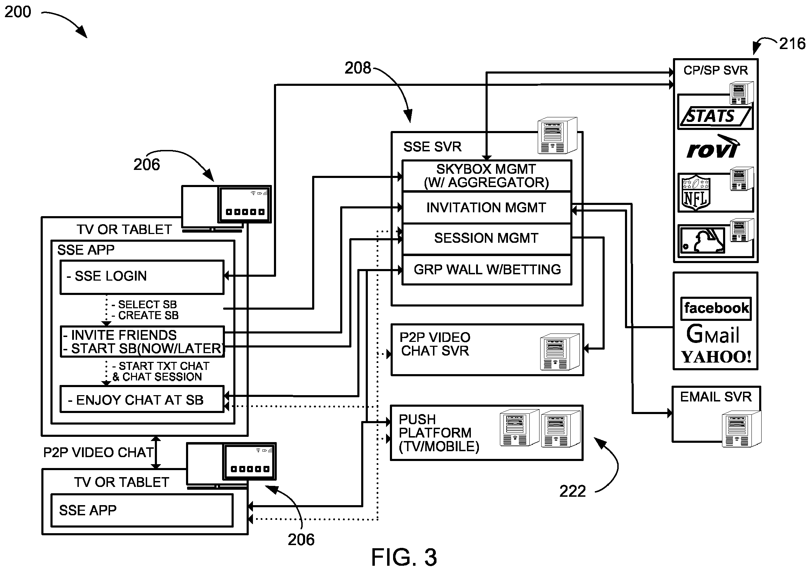

Referring now to FIG. 3, therein is shown a block diagram for a video chat function of the network system 200 in an embodiment of the invention. The block diagram and process for the video chat function provides on-demand audio and video chat experience. In an embodiment, Samsung Sports Experience supports a video chat session among up to N locations (N-way) on TVs, Tablets, and Smartphones. If platform capabilities permit, multiple N-way video chat sessions are supported per Samsung Sports Experience event.

The network system 200 provides the video chat function with the audio-visual device 206, the experience server 208 for providing the Samsung Sports Experience (SSE), the "skybox" 214 of FIG. 2, network servers 216, which can include contact list servers, email servers, cyber sports provider servers (CP), social network provider servers (SP), the push server 222 such as a Samsung Push Platform, or combination thereof.

For example, a process for the video chat function can include:
1. Get Available "Skyboxes" 214,
   which can include 1.1a Get game data for SSE Server or 1.1b Get game data from online sports such as CP or SP servers directly,
2. Create "Skybox" 214,
3. Invite Friends,
   which can include 3.1) Get email info from friends list or 3.2) Send emails,
4. Start Skybox Session,
   which can include 4.1) Initiate Skybox Session and notify both the text and video chat servers,
5. Text Chat,
   which can include 5.1) Push Texts, and
6. Start Video/Audio Chat,
   which can include 6.1) Auto-answer and connect PSP video/audio chat.

It has been discovered that the video chat function of the network system 200 integrates chat with the simultaneous viewing experience to provide communication including challenges.

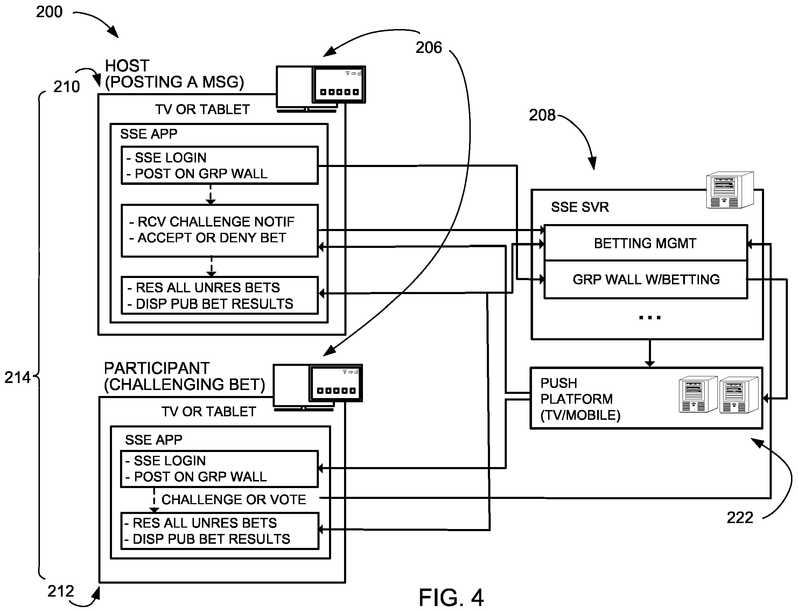

Referring now to FIG. 4, therein is shown a block diagram for "group wall", betting, and polling functions of the network system 200 in an embodiment of the invention. The block diagram and process for the "group wall", betting and polling functions provides engagement and friendly competition through chats and polls. In an embodiment, the Samsung Sports Experience of the network system 200 supports a group chatting feature enabling text-based communication between a group of all event participants (Host and Guests). The chatting feature is accessible on TV's and mobile devices. The group or all event guests are enabled to participate in the group chat. Users can choose a message or post type when composing the message.

The network system 200 can provide "group wall", betting, and polling functions with the audio-visual device 206, the experience server 208 for providing the Samsung Sports Experience (SSE), group of friends such as the Group A 210, the additional groups of friends such as the Group B 212, the "skybox" 214, the push server 222 such as a Samsung Push Platform, or combination thereof.

Chat entries are posted to a "group wall" where all members of the groups such as event participants can see them. The "group wall" can be visible on a dedicated chat screen or a split screen view of the audio-visual device 206 of FIG. 2 in the Samsung Sports Experience. Chat entries can scroll through a notification bar when watching the event such as a game in full screen on the audio-visual device 206 such as a television. Users can preferably see and review group wall postings as of their joining the group chat. Leaving and rejoining the group chat will limit the ability to see "group wall" objects to those posted when users were actively signed into the group chat.

To encourage or entice interaction and communication between members of the group such as event participants, the Samsung Sports Experience group Chat feature supports informal challenges and polling. "Group wall" objects are scrollable and selectable by all members of the group such as event participants. Selection of a text message object can preferably provide viewable buttons such as surface two buttons: "Vote for" and "Vote against".

When any of the members of the group such as a user who is not the author of the original object selects either button, a message can be sent to the original author of the object, informing the author that a particular user such as "user X" has responded or opined regarding the statement made in the original chat entry. Notifications can preferably be only acknowledged by the author and not declined.

A first user responding to an author's text message and making it a challenge by selecting either the "vote for" or "vote against" button has the option or opportunity to add a new text message to the notification sent to the original author (for example, "I bet you a beer"). This comment will be displayed in the group wall object along with the original message.

Once the author has acknowledged the vote for or against, a new chat object is created and posted to the group wall informing the group or all participants that author and "user X" have entered into an informal challenge regarding the original entry.

The new chat object features two buttons (vote for and vote against), allowing other participant to choose or take a side and either vote with the author or the user who has challenged the original statement. The two options can be accessed and selected by highlighting the new chat object which provides viewable buttons or surfaces the two selection buttons. When Votes are submitted, a counter for the "for or against" vote is displayed next to each option on the chat object.

The polling function includes polls as special group chat objects that users can choose as a chat entry type when composing their post. A group chat object defined as a poll will feature a user interface (UI) different from other typical or regular chat posts to clearly indicate that the author has solicited responses regarding the poll or question.

Once a poll has been posted to the "group wall", all others of the group such as the Samsung Sports Experience event participants can highlight the object on the group wall and select either the vote for or vote against button to register their response. Responses are tallied and displayed on the group wall object. Bet and poll objects are preferably only displayed or live only on the group wall. The objects will show a count of users who have responded such as bet for or against, or voted for or against.

For example, a process for the "group wall", betting, and polling functions can include:
1. Post posted message on group wall,
   which can include 1.1) Broadcast posted message,
2. Challenge, vote, or choose side,
3. Notify of challenge or vote with challenge/vote notification,
4. Respond to challenge with challenge response,
   which can include 4.1) Broadcast bet or challenge,
5. Request resolution, and
6. Return consensus result

It has been discovered that the "group wall", betting, and polling functions of the network system 200 provides a simultaneous viewing experience in addition to viewing the common program 226 thus providing communication and challenges between the members of the group.

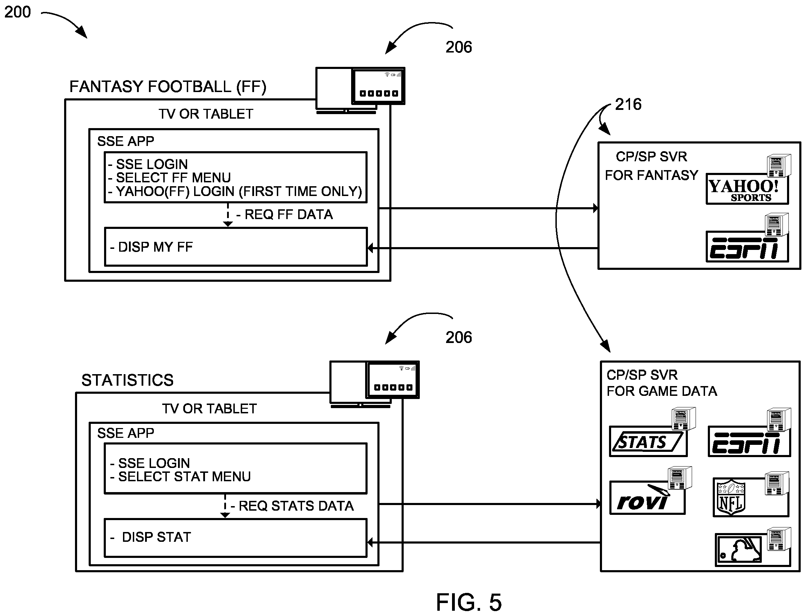

Referring now to FIG. 5, therein is shown a block diagram for statistics or stats, and fantasy sports functions of the network system 200 in an embodiment of the invention. The block diagram and process for the stats and fantasy sports functions provides integration of real-time sports information.

Samsung Sports Experience (SSE) features access to a wide range of sports data and statistics regarding the teams, players and leagues involved in the games being watched through SSE. The data will be organized and presented throughout the Samsung Sports Experience User Interface (SSE UI) with real time game information prominently displayed in the SSE main menu, an event split-screen views and the SSE app detail views for stats. Detailed league, team and player stats that are presented in dedicated screens will allow searching and sorting of information. The data is accessible through both the Smart TV and Mobile SSE applications.

The network system 200 provides the stats and fantasy sports functions with the audio-visual device 206, the experience server 208 of FIG. 2 for providing the Samsung Sports Experience (SSE), network servers 216, which can include contact list servers, email servers, cyber sports provider servers (CP), social network provider servers (SP), or combination thereof.

SSE integrates with existing online fantasy sports services from providers such as Yahoo(tm) and ESPN(tm). Individual users, such as Host and Guests, can sign-on to their existing Fantasy League accounts through the SSE application interface. Fantasy Sports Services such as Fantasy League accounts are linked to a user's identification (ID). Fantasy League standings can be displayed in real-time.

Users can review scores and player details for their Fantasy Teams of the Fantasy League from within SSE. All Fantasy Team or Fantasy League management will have to occur outside of SSE, directly with the Fantasy Sports League or Service. SSE features dedicated screens to view and track fantasy sports data and standings. The data on these screens is searchable and sortable.

The network system 200 provides the stats and fantasy sports functions with the audio-visual device 206, the experience server 208 of FIG. 2 for providing the Samsung Sports Experience (SSE), network servers 216, which can include contact list servers, email servers, cyber sports provider servers (CP), social network provider servers (SP), or combination thereof.

For example, a process for the fantasy sports function can include:
1. Request fantasy football data,
2. Respond to fantasy football data

For example, a process for the stats function can include:
1. Request statistics data
2. Respond to statistics data

It has been discovered that statistics or stats, and fantasy sports functions of the network system 200 augments the simultaneous viewing experience with data regarding the program or game being watch in addition to viewing the common program 226 providing additional information and possibly improving challenges between the members of the group.

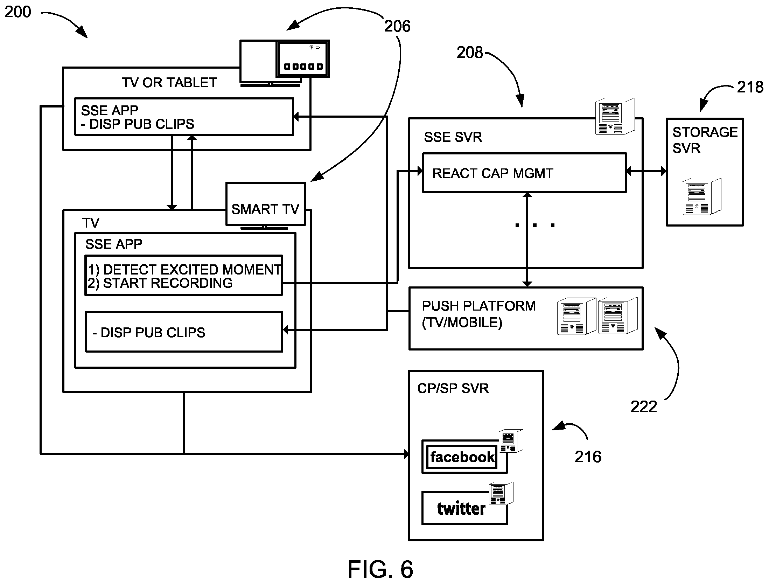

Referring now to FIG. 6, therein is shown a block diagram for social network integration and reaction capture functions of the network system 200 in an embodiment of the invention. The block diagram and process for the social network integration and the reaction capture functions provides the Samsung Sports Experience (SSE) integration with social network providers, such as Facebook(tm) and Twitter(tm), for export and import of information between SSE and the social network providers. This allows capturing exciting user reactions automatically as video clips that can be shared.

The network system 200 provides social network integration and the reaction capture functions with the audio-visual device 206, the experience server 208 for providing the Samsung Sports Experience (SSE), the "skybox" 214 of FIG. 2, the network servers 216, which can include cyber sports provider servers (CP), social network provider servers (SP), the storage server 218, the push server 222 such as a Samsung Push Platform, or combination thereof.

For example, a process for the social network integration and reaction capture functions can include:
1. Detect "Excited Moment" on TV
2. Start recording
3. Cache Clip in SSE Server for "Skybox" publishing
4. Publish Clip to "Skybox" Feeds
5. Post Reactions on SNS so "Skybox" users can share reactions via SNS Post

It has been discovered that social network integration and reaction capture functions of the network system 200 provides social network access and shares user reactions in addition to viewing the common program 226 enhancing the communication and challenges experience between the members of the group.

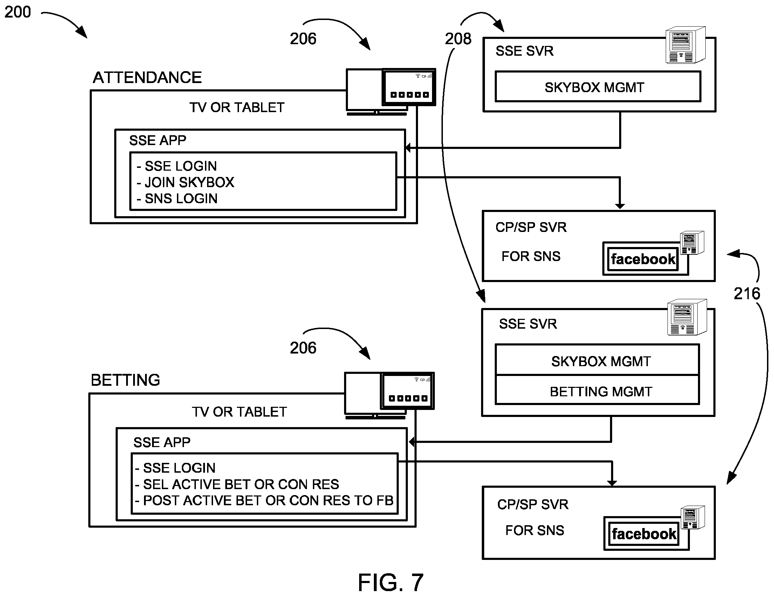

Referring now to FIG. 7, therein is shown a block diagram for a social check-in (attendance, bets) function of the network system 200 in an embodiment of the invention. The block diagram and process for the social check-in (attendance, bets) functions for interconnecting with different users.

The network system 200 provides the social check-in (attendance, bets) functions with the audio-visual device 206, the experience server 208 of FIG. 2 for providing the Samsung Sports Experience (SSE), network servers 216, which can include cyber sports provider servers (CP), social network provider servers (SP), or combination thereof.

For example, a process for the social check-in attendance function can include:
1. Retrieve attendance data and Skybox Identification (ID) number,
2. Publish to social network service (SNS) with guest invite.

Further for example, a process for the social check-in bets function can include:
1. Retrieve bet and Skybox ID # or bet results,
2. Publish bet to social network service (SNS) with guest invite or bet results.

Yet further for example, the network system 200 can provide 3 types of posting items:
1. Attendance
2. Bets
3. Reactions

All postings can have the option to include a guest invitation or guest invite to join the "Skybox" 214" of FIG. 2.

It has been discovered that social check-in (attendance, bets) functions of the network system 200 can include guest invitations for attendance or challenges such as bets broadening the communication and challenges experience beyond the members of the group.

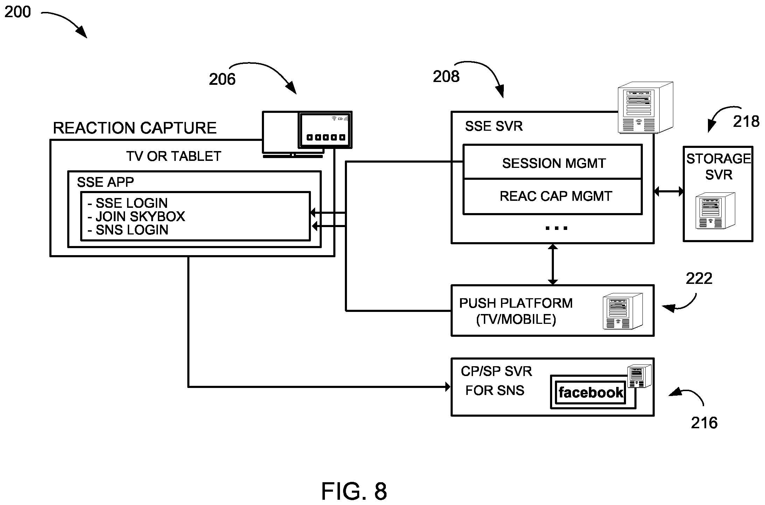

Referring now to FIG. 8, therein is shown a block diagram for a reaction capture function of the network system 200 in an embodiment of the invention. The block diagram and process for the reaction capture function provides the Samsung Sports Experience (SSE) integration with social network providers, such as Facebook(tm) and Twitter(tm), for export and import of information between SSE and the social network providers. This allows capturing exciting user reactions that can be shared.

The network system 200 provides social network integration and the reaction capture functions with the audio-visual device 206, the experience server 208 for providing the Samsung Sports Experience (SSE), the "skybox" 214 of FIG. 2, the network servers 216, which can include cyber sports provider servers (CP), social network provider servers (SP), the storage server 218, the push server 222 such as a Samsung Push Platform, or combination thereof.

For example, a process for the reaction capture function can include:
1. Retrieve Skybox identification (ID) number,
2. Publish captured reactions to client,
3. Publish reaction to SNS with guest invite.

It has been discovered that the reaction capture function of the network system 200 provides export and import between social networking providers as well as guest invitations for sharing with a larger audience than the members of the group.

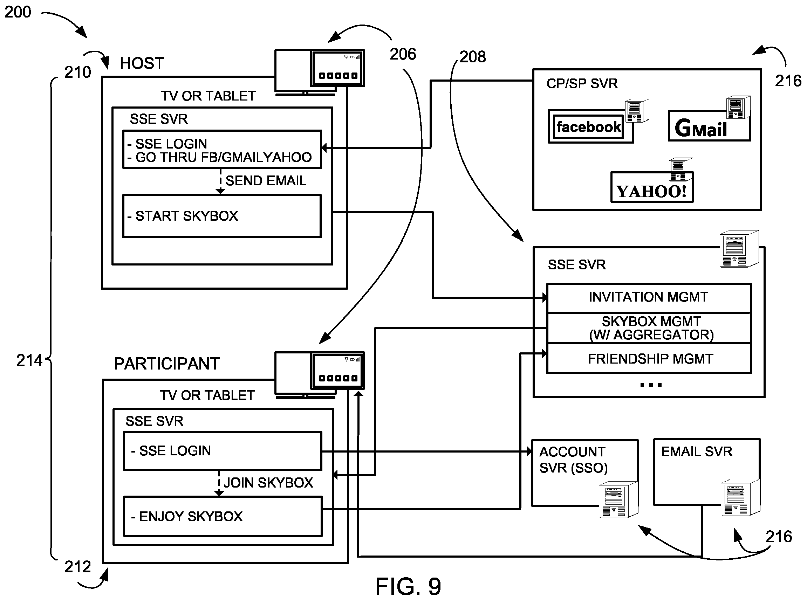

Referring now to FIG. 9, therein is shown a block diagram for a buddy creation function of the network system 200 in an embodiment of the invention. The block diagram and process for the buddy creation function provides the Samsung Sports Experience (SSE) integration with the network servers 216, which can include the email servers, cyber sports provider servers (CP), social network provider servers (SP), the account server 224, or combination thereof.

The network system 200 provides social network integration and the reaction capture functions with the audio-visual device 206, the experience server 208 for providing the Samsung Sports Experience (SSE), the "skybox" 214, the network servers 216, which can include cyber sports provider servers (CP), social network provider servers (SP), the storage server 218, the push server 222 such as a Samsung Push Platform, or combination thereof.

The host can create invitations or invites for events from within the Samsung Sports Experience (SSE). The invitation process can be initiated at anytime through an invite function in the event configuration and scheduling screens (not shown). It can also be initiated after selecting a game through the event selection function. The invites can be delivered as emails or app notifications (within the SSE app) to the invitees. Invitees are chosen from a SSE address book such as an SSE buddy list. A host can create a custom invitee list specific to an event and save as a reusable list in SSE. Invitees who join a SSE Event are called guests.

To initially populate the invitee list, such as the SSE buddy list, a host can choose to import email addresses from their existing address books available through their Samsung, Google(tm), Facebook(tm) and Yahoo(tm) ID's. The import function is accessible through the SSE Directory or buddy list screens in the main SSE application menu. The buddy list will be stored securely on SSE servers and is accessible to users from any supported television, portable device, or mobile device after appropriate authentication.

Contact addresses can be populated into an "add to buddy list" SSE event screen from which the list or addresses can be saved into event invite notifications. The host uses the buddy list to create the invites for the specific event invitation the host would like to create.

For example, a process for the buddy creation function can include:
1. Retrieve email contacts via login,
2. Invite by email,
   which can include 2.1) Request to send email with invite plus delivery or distribution list (DL) and registration link and Skybox identification (ID),
3. Receive invites with invite link and Skybox identification (ID) number, such as by email,
4. Create single sign-on (SSO) identification (ID),
5. Retrieve Skybox list,
   which can include 5.1) Populate invites by linked email identification (ID),
6. Join Skybox or enter identification (ID) to join if single sign-on (SSO) account is under different email,
7. Create buddies.

A Buddy can be defined as another user that joins a Skybox based on an invite sent from an initial user. This relationship can be stored or remembered.

It has been discovered that the buddy creation function of the network system 200 provides improves the invitation process by importing address books and creating custom invitee lists to facilitate invitations for guests.

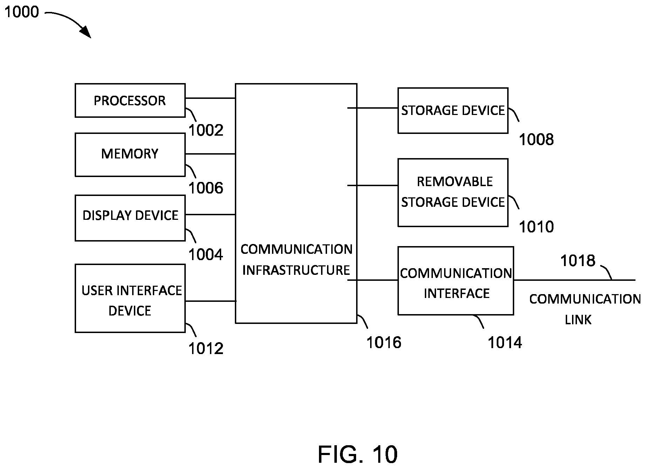

Referring now to FIG. 10, therein is shown a high level block diagram for an information processing system 1000 of the network system 200 in an embodiment of the invention. The high level block diagram for the information processing system 1000 such as a computer system 1000 can include several components, devices, and modules for processing information to implement the network system 200.

The computer system 1000 can include one or more processors 1002, and can further include an electronic display device 1004 for displaying graphics, text, and other data, a main memory 1006 (such as random access memory (RAM)), a storage device 1008 (such as a hard disk drive, a solid state drive, flash memory, other non-volatile memory, or combination thereof), removable storage device 1010 (such as a removable storage drive, removable memory module, a magnetic tape drive, optical disk drive, computer readable medium having stored therein computer software and/or data, or combination thereof), user interface device 1012 (such as keyboard, touch screen, keypad, pointing device, or combination thereof), and a communication interface 1014 (such as a modem, a network interface including an Ethernet card, a communications port, a PCMCIA slot and card, or combination thereof).

The communication interface 1014 allows software and data to be transferred between the computer system and external devices. The computer system 1000 further includes a communications infrastructure 1016 (such as a communications bus, cross-over bar, network, or combination thereof) by which the aforementioned devices and modules 1002 through 1014 are connected.

Information transferred via the communications interface 1016 can include signals such as electronic, electromagnetic, optical, or other signals capable of being received by the communications interface 1014 via a communication link 1018 that carries signals. The communication link 1018 can be implemented using wire, cable, fiber optics, phone line, cellular phone link, radio frequency (RF) link, other communication channels, other communication protocols, or combination thereof.

Computer program instructions representing block diagrams or flowcharts described herein can be loaded onto the computer system 100, programmable data processing apparatus, processing devices, or combination thereof, to implement any or all of operations performed thereon to produce a computer implemented process.

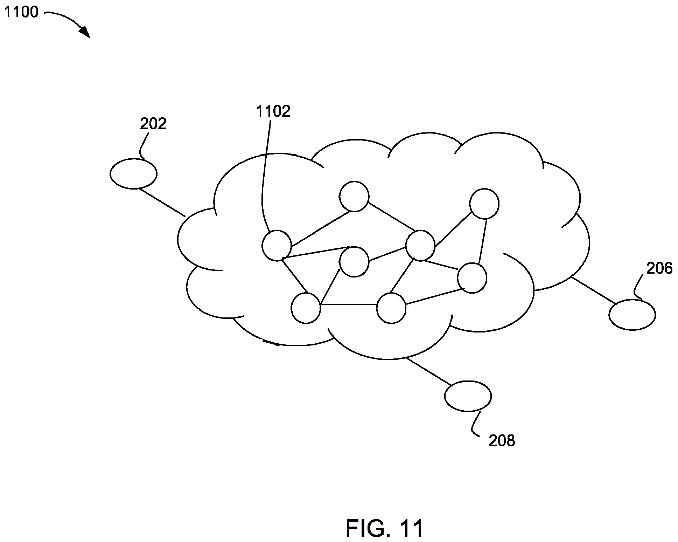

Referring now to FIG. 11, therein is shown a cloud computing system 1100 for the network system 200 in an embodiment of the invention. The cloud computing system 1100 illustrates a cloud computing environment 1100 including cloud processing nodes 1102 with which local computing devices used by cloud consumers, such as portable device 202 of FIG. 2, audio visual device 206 of FIG. 2, or other device describe herein, can communicate.

The processing nodes 1102 can communicate therebetween, and can be grouped in one or more networks providing infrastructure, platforms, software as services, or combination thereof for which a cloud consumer does not need to maintain resources on a local computing device such as the portable device 202, the audio-visual device 206, the experience server 208, other network devices, or combination thereof.

An embodiment of the present invention supports consumer electronics devices and may be implemented or practiced in distributed or cloud computing environments having program modules that can be located in either or both of local and remote devices. Such a computing environment can have nodes for communication with local computing devices used by cloud consumers, such as mobile devices, other electronic devices, or combination thereof.

The nodes may interconnect, group, provide infrastructure, platforms, software as services, or combination thereof, for which a cloud consumer does not need to maintain resources on a local computing device. Virtualization layers may include virtual servers, virtual storage, virtual networks, virtual applications, virtual operating systems, virtual clients, or combination thereof.

Cloud management functions include resource provisioning for dynamic procurement of computing resources and other resources that are utilized to perform tasks within the cloud computing environment 1100. Support for metering/pricing provides cost tracking for cloud resources, along with associated billing/invoicing. These resources may be software licenses, content licenses, other agreements, or combination thereof. Further, support is provided for security including content filtering, identity verification, and the like, for cloud consumers and tasks, as well as protection for data and other resources. Further, support is provided for service level management including resource allocation for required service levels.

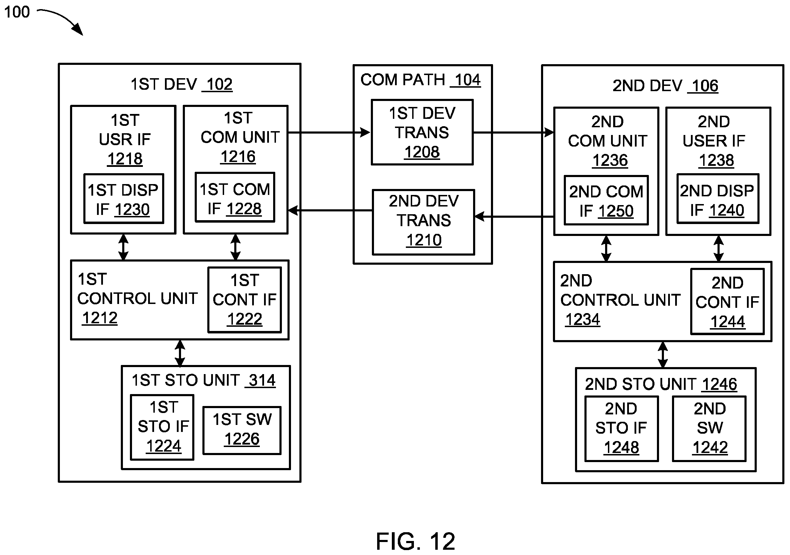

Referring now to FIG. 12, therein is shown an exemplary block diagram of the network system 100. The network system 100 can include the first device 102, the communication path 104, and the second device 106. The first device 102 can send information in a first device transmission 1208 over the communication path 104 to the second device 106. The second device 106 can send information in a second device transmission 1210 over the communication path 104 to the first device 102.

For illustrative purposes, the network system 100 is shown with the first device 102 as a client device, although it is understood that the network system 100 can have the first device 102 as a different type of device. For example, the first device 102 can be a server having a display interface.

Also for illustrative purposes, the network system 100 is shown with the second device 106 as a server, although it is understood that the network system 100 can have the second device 106 as a different type of device. For example, the second device 106 can be a client device.

For brevity of description in this embodiment of the present invention, the first device 102 will be described as a client device and the second device 106 will be described as a server device. The embodiment of the present invention is not limited to this selection for the type of devices. The selection is an example of an embodiment of the present invention.

The first device 102 can include a first control unit 1212, a first storage unit 12I4, a first communication unit 12I6, and a first user interface 1218. The first control unit 1212 can include a first control interface 1222. The first control unit 1212 can execute a first software 1226 to provide the intelligence of the network system 100.

The first control unit 12I2 can be implemented in a number of different manners. For example, the first control unit 1212 can be a processor, an application specific integrated circuit (ASIC) an embedded processor, a microprocessor, a hardware control logic, a hardware finite state machine (FSM), a digital signal processor (DSP), or a combination thereof. The first control interface 1222 can be used for communication between the first control unit 1212 and other functional units in the first device 102. The first control interface 1222 can also be used for communication that is external to the first device 102.

The first control interface 1222 can receive information from the other functional units or from external sources, or can transmit information to the other functional units or to external destinations. The external sources and the external destinations refer to sources and destinations external to the first device 102.

The first control interface 1222 can be implemented in different ways and can include different implementations depending on which functional units or external units are being interfaced with the first control interface 1222. For example, the first control interface 1222 can be implemented with a pressure sensor, an inertial sensor, a microelectromechanical system (MEMS), optical circuitry, waveguides, wireless circuitry, wireline circuitry, or a combination thereof.

The first storage unit 1214 can store the first software 1226. The first storage unit 1214 can also store the relevant information, such as data representing incoming images, data representing previously presented image, sound files, or a combination thereof.

The first storage unit 1214 can be a volatile memory, a nonvolatile memory, an internal memory, an external memory, or a combination thereof. For example, the first storage unit 1214 can be a nonvolatile storage such as non-volatile random access memory (NVRAM), Flash memory, disk storage, or a volatile storage such as static random access memory (SRAM).

The first storage unit 1214 can include a first storage interface 1224. The first storage interface 1224 can be used for communication between and other functional units in the first device 102. The first storage interface 1224 can also be used for communication that is external to the first device 102.

The first storage interface 1224 can receive information from the other functional units or from external sources, or can transmit information to the other functional units or to external destinations. The external sources and the external destinations refer to sources and destinations external to the first device 102.

The first storage interface 1224 can include different implementations depending on which functional units or external units are being interfaced with the first storage unit 1214. The first storage interface 1224 can be implemented with technologies and techniques similar to the implementation of the first control interface 1222.

The first communication unit 1216 can enable external communication to and from the first device 102. For example, the first communication unit 1216 can permit the first device 102 to communicate with the second device 106 of FIG. 1, an attachment, such as a peripheral device or a computer desktop, and the communication path 104.

The first communication unit 1216 can also function as a communication hub allowing the first device 102 to function as part of the communication path 104 and not limited to be an end point or terminal unit to the communication path 104. The first communication unit 1216 can include active and passive components, such as microelectronics or an antenna, for interaction with the communication path 104.

The first communication unit 1216 can include a first communication interface 1228. The first communication interface 1228 can be used for communication between the first communication unit 1216 and other functional units in the first device 102. The first communication interface 1228 can receive information from the other functional units or can transmit information to the other functional units.

The first communication interface 1228 can include different implementations depending on which functional units are being interfaced with the first communication unit 1216. The first communication interface 1228 can be implemented with technologies and techniques similar to the implementation of the first control interface 1222.

The first user interface 1218 allows a user (not shown) to interface and interact with the first device 102. The first user interface 1218 can include an input device and an output device. Examples of the input device of the first user interface 1218 can include a keypad, a touchpad, soft-keys, a keyboard, a microphone, an infrared sensor for receiving remote signals, or any combination thereof to provide data and communication inputs.

The first user interface 1218 can include a first display interface 1230. The first display interface 1230 can include a display, a projector, a video screen, a speaker, or any combination thereof.

The first control unit 1212 can operate the first user interface 1218 to display information generated by the network system 100. The first control unit 1212 can also execute the first software 1226 for the other functions of the network system 100. The first control unit 1212 can further execute the first software 1226 for interaction with the communication path 104 via the first communication unit 1216.

The second device 106 can be optimized for implementing an embodiment of the present invention in a multiple device embodiment with the first device 102. The second device 106 can provide the additional or higher performance processing power compared to the first device 102. The second device 106 can include a second control unit 1234, a second communication unit 1236, and a second user interface 1238.

The second user interface 1238 allows a user (not shown) to interface and interact with the second device 106. The second user interface 1238 can include an input device and an output device. Examples of the input device of the second user interface 1238 can include a keypad, a touchpad, soft-keys, a keyboard, a microphone, or any combination thereof to provide data and communication inputs. Examples of the output device of the second user interface 1238 can include a second display interface 1240. The second display interface 1240 can include a display, a projector, a video screen, a speaker, or any combination thereof.

The second control unit 1234 can execute a second software 1242 to provide the intelligence of the second device 106 of the network system 100. The second software 1242 can operate in conjunction with the first software 1226. The second control unit 1234 can provide additional performance compared to the first control unit 1212.

The second control unit 1234 can operate the second user interface 1238 to display information. The second control unit 1234 can also execute the second software 1242 for the other functions of the network system 100, including operating the second communication unit 1236 to communicate with the first device 102 over the communication path 104.

The second control unit 1234 can be implemented in a number of different manners. For example, the second control unit 1234 can be a processor, an embedded processor, a microprocessor, hardware control logic, a hardware finite state machine (FSM), a digital signal processor (DSP), or a combination thereof.

The second control unit 1234 can include a second controller interface 1244. The second controller interface 1244 can be used for communication between the second control unit 1234 and other functional units in the second device 106. The second controller interface 1244 can also be used for communication that is external to the second device 106.

The second controller interface 1244 can receive information from the other functional units or from external sources, or can transmit information to the other functional units or to external destinations. The external sources and the external destinations refer to sources and destinations external to the second device 106.

The second controller interface 1244 can be implemented in different ways and can include different implementations depending on which functional units or external units are being interfaced with the second controller interface 1244. For example, the second controller interface 1244 can be implemented with a pressure sensor, an inertial sensor, a microelectromechanical system (MEMS), optical circuitry, waveguides, wireless circuitry, wireline circuitry, or a combination thereof.

A second storage unit 1246 can store the second software 1242. The second storage unit 1246 can also store the such as data representing incoming images, data representing previously presented image, sound files, or a combination thereof.. The second storage unit 1246 can be sized to provide the additional storage capacity to supplement the first storage unit 1214.

For illustrative purposes, the second storage unit 1246 is shown as a single element, although it is understood that the second storage unit 1246 can be a distribution of storage elements. Also for illustrative purposes, the network system 100 is shown with the second storage unit 1246 as a single hierarchy storage system, although it is understood that the network system 100 can have the second storage unit 1246 in a different configuration. For example, the second storage unit 1246 can be formed with different storage technologies forming a memory hierarchal system including different levels of caching, main memory, rotating media, or off-line storage.

The second storage unit 1246 can be a volatile memory, a nonvolatile memory, an internal memory, an external memory, or a combination thereof. For example, the second storage unit 1246 can be a nonvolatile storage such as non-volatile random access memory (NVRAM), Flash memory, disk storage, or a volatile storage such as static random access memory (SRAM).

The second storage unit 1246 can include a second storage interface 1248. The second storage interface 1248 can be used for communication between other functional units in the second device 106. The second storage interface 1248 can also be used for communication that is external to the second device 106.

The second storage interface 1248 can receive information from the other functional units or from external sources, or can transmit information to the other functional units or to external destinations. The external sources and the external destinations refer to sources and destinations external to the second device 106.

The second storage interface 1248 can include different implementations depending on which functional units or external units are being interfaced with the second storage unit 1246. The second storage interface 1248 can be implemented with technologies and techniques similar to the implementation of the second controller interface 1244.

The second communication unit 1236 can enable external communication to and from the second device 106. For example, the second communication unit 1236 can permit the second device 106 to communicate with the first device 102 over the communication path 104.

The second communication unit 1236 can also function as a communication hub allowing the second device 106 to function as part of the communication path 104 and not limited to be an end point or terminal unit to the communication path 104. The second communication unit 1236 can include active and passive components, such as microelectronics or an antenna, for interaction with the communication path 104.

The second communication unit 1236 can include a second communication interface 1250. The second communication interface 1250 can be used for communication between the second communication unit 1236 and other functional units in the second device 106. The second communication interface 1250 can receive information from the other functional units or can transmit information to the other functional units.

The second communication interface 1250 can include different implementations depending on which functional units are being interfaced with the second communication unit 1236. The second communication interface 1250 can be implemented with technologies and techniques similar to the implementation of the second controller interface 1244.

The first communication unit 1216 can couple with the communication path 104 to send information to the second device 106 in the first device transmission 1208. The second device 106 can receive information in the second communication unit 1236 from the first device transmission 1208 of the communication path 104.

The second communication unit 1236 can couple with the communication path 104 to send information to the first device 102 in the second device transmission 1210. The first device 102 can receive information in the first communication unit 1216 from the second device transmission 1210 of the communication path 104. The network system 100 can be executed by the first control unit 1212, the second control unit 1234, or a combination thereof. For illustrative purposes, the second device 106 is shown with the partition having the second user interface 1238, the second storage unit 1246, the second control unit 1234, and the second communication unit 1236, although it is understood that the second device 106 can have a different partition. For example, the second software 1242 can be partitioned differently such that some or all of its function can be in the second control unit 1234 and the second communication unit 1236. Also, the second device 106 can include other functional units not shown in FIG. 12 for clarity.

The functional units in the first device 102 can work individually and independently of the other functional units. The first device 102 can work individually and independently from the second device 106 and the communication path 104.

The functional units in the second device 106 can work individually and independently of the other functional units. The second device 106 can work individually and independently from the first device 102 and the communication path 104.

For illustrative purposes, the network system 100 is described by operation of the first device 102 and the second device 106. It is understood that the first device 102 and the second device 106 can operate any of the modules and functions of the network system 100.

The first control unit 1212 or the second control unit 1234 can perform authenticating a login for the collaborative space, posting a challenge in the collaborative space for staking out a claim by a user and configured to display on a device, receiving a response to the challenge in the collaborative space for taking sides by another user and configured to display on the device, or resolving the challenge outcome configured to display on the device. The first display interface 1230 or the second display interface 1240 can perform creating a collaborative space.

Further, the modules described in this application can be part of the first software 1226, the second software 1242, or a combination thereof. These modules can also be stored in the first storage unit 1214, the second storage unit 1246, or a combination thereof. The first control unit 1212, the second control unit 1234, or a combination thereof can execute these modules for operating the computing system 100.

The functions and features described in this application can be hardware implementation, hardware circuitry, or hardware accelerators in the first control unit 1212 or in the second control unit 1234. The functions and features can also be hardware implementation, hardware circuitry, or hardware accelerators within the first device 102 or the second device 106 but outside of the first control unit 1212 or the second control unit 1234, respectively.

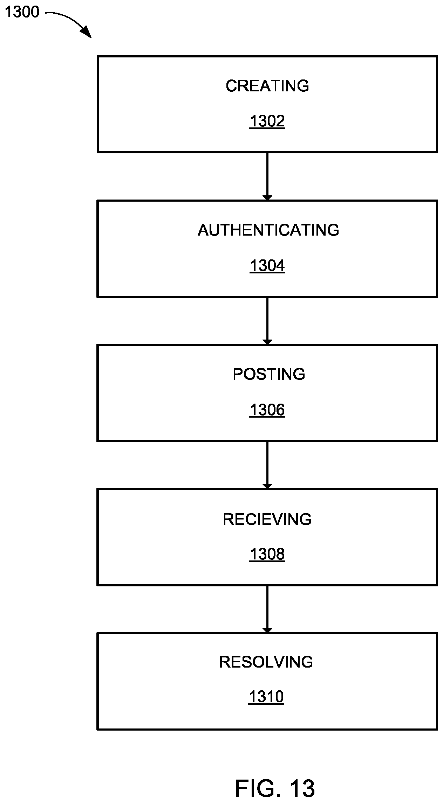

Referring now to FIG. 13, therein is shown a flow chart of a method 1300 of operation of a network system 200 in an embodiment of the present invention. The method 1300 includes: creating a collaborative space in a block 1302; authenticating a login for the collaborative space in a block 1304; posting a challenge in the collaborative space configured to display on a device in a block 1306; receiving a response to the challenge in the collaborative space configured to display on the device in a block 1308; and resolving the challenge outcome configured to display on the device in a block 1310.

The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization. Another important aspect of an embodiment of the present invention is that it valuably supports and services the historical trend of reducing costs, simplifying systems, and increasing performance.

As is known to those skilled in the art, the aforementioned example architectures described above, according to the present invention, can be implemented in many ways, such as program instructions for execution by a processor, as software modules, microcode, as computer program product on computer readable media, as logic circuits, as application specific integrated circuits, as firmware, as consumer electronic devices, etc. Further, embodiments of the invention can take the form of an entirely hardware embodiment, an entirely software embodiment or an embodiment containing both hardware and software elements.

These and other valuable aspects of an embodiment of the present invention consequently further the state of the technology to at least the next level.

While the invention has been described in conjunction with a specific best mode, it is to be understood that many alternatives, modifications, and variations will be apparent to those skilled in the art in light of the foregoing description. Accordingly, it is intended to embrace all such alternatives, modifications, and variations that fall within the scope of the included claims. All matters set forth herein or shown in the accompanying drawings are to be interpreted in an illustrative and non-limiting sense.

## Claims

1. A device comprising:
a display interface (1230, 1250) configured to create a collaborative space, wherein at least one user accesses, through the collaborative space, a first server providing a sports event and a second server providing a social network service;
a control unit (1212, 1234), coupled to the display interface (1230, 1250), configured to:
authenticate (1304), through the second server, a login for the at least one user in the collaborative space;
display (1306) a challenge related to the sports event provided from the first server in the collaborative space;
receive (1308) at least one vote related to the challenge from the at least one user in the collaborative space; and
output (1310) a result of the challenge based on the at least one vote.

2. The device as claimed in claim 1, wherein the control unit (1212, 1234) is configured to control the display interface (1230, 1250) to display viewable buttons including a vote for button and a vote against button.

3. The device as claimed in claim 2, wherein the control unit (1212, 1234) is configured to control the display interface (1230, 1250) to display counters for the vote for button and the vote against button as the result of the challenges.

4. The device as claimed in claim 1 wherein the collaborative space is displayed on multiple devices (102, 106).

5. The device as claimed in claim 1, wherein the control unit (1212, 1234) is configured to execute an application configured to network two or more logins of collaborative space.

6. The device as claimed in claim 1 wherein the control unit (1212, 1234) is configured to:
control the display interface (1230, 1250) to display a challenge is for staking out a claim by another user in the collaborative space; and
receive votes for taking sides by the another user in the collaborative space.

7. A method of operation of a device comprising:
creating a collaborative space, wherein at least one user accesses, through the collaborative space, a first server providing a sports event and a second server providing a social network service;
authenticating (1304), through the second server, using a control unit (1212, 1234), a login for the at least one user in the collaborative space;
displaying (1306) a challenge related to the sports event provided from the first server in the collaborative space;
receiving (1308) at least one vote related to the challenge from the at least one user in the collaborative space; and
outputting (1310) a result of the challenge based on the at least one vote.

8. The method as claimed in claim 7, further comprising displaying viewable buttons including a vote for button and a vote against button.

9. The method as claimed in claim 8, further comprising displaying counters for the vote for button and the vote against button as the result of the challenges.

10. The method as claimed in claim 7, wherein creating the collaborative space includes creating the collaborative space on multiple display devices (102, 106).

11. The method as claimed in claim 7, further comprising executing an application for networking two or more logins of the collaborative space.

12. The method as claimed in claim 7, wherein displaying the challenge comprises:
displaying (1306) a challenge for staking out a claim by another user in the collaborative space; and
receiving (1308) votes in response to the challenge for taking sides by the another user in the collaborative space.

## Patentansprüche

1. Gerät, umfassend;
eine Anzeigeschnittstelle (1230, 1250), die konfiguriert ist, um einen gemeinschaftlichen Bereich zu erzeugen, wobei mindestens ein Benutzer Zugriff, durch den gemeinschaftlichen Bereich, auf einen ersten, ein Sportereignis bereitstellenden Server und einen zweiten, ein soziales Netzwerk bereitstellenden Server hat;
eine mit der Anzeigeschnittstelle (1230, 1250) gekoppelte Steuereinheit (1212, 1234), die konfiguriert ist, um:
durch den zweiten Server eine Anmeldung für den mindestens einen Benutzer im gemeinschaftlichen Bereich zu authentifizieren (1304);
einen Wettbewerb anzuzeigen (1306), der mit dem von dem ersten Server im gemeinschaftlichen Bereich bereitgestellten Sportereignis verbunden ist;
mindestens eine mit dem Wettbewerb verbundene Stimme von dem mindestens einen Benutzer im gemeinschaftlichen Bereich zu empfangen (1308); und
ein Ergebnis des Wettbewerbs basierend auf der mindestens einen Stimme auszugeben (1310).

2. Gerät nach Anspruch 1, wobei die Steuereinheit (1212, 1234) konfiguriert ist, um die Anzeigeschnittstelle (1230, 1250) zu steuern, um sichtbare, eine Schaltfläche zum dafür Stimmen und einen Schaltfläche zum dagegen Stimmen umfassende Schaltflächen anzuzeigen.

3. Gerät nach Anspruch 2, wobei die Steuereinheit (1212, 1234) konfiguriert ist, um die Anzeigeschnittstelle (1230, 1250) zu steuern, um Zähler für die Schaltfläche zum dafür Stimmen und die Schaltfläche zum dagegen Stimmen als Ergebnis der Wettbewerbe anzuzeigen.

4. Gerät nach Anspruch 1 wobei der gemeinschaftliche Bereich auf mehreren Geräten (102, 106) angezeigt ist.

5. Gerät nach Anspruch 1, wobei die Steuereinheit (1212, 1234) konfiguriert ist, um eine Anwendung auszuführen, die konfiguriert ist, um zwei oder mehr Anmeldungen des gemeinschaftlichen Bereichs zu vernetzen.

6. Gerät nach Anspruch 1, wobei die Steuereinheit (1212, 1234) konfiguriert ist, um:
die Anzeigeschnittstelle (1230, 1250) zu steuern, um anzuzeigen, dass ein Wettbewerb zum Anmelden eines Anspruchs durch einen anderen Benutzer im gemeinschaftlichen Bereich ist; und
Stimmen zur Parteiergreifung durch den anderen Benutzer im gemeinschaftlichen Bereich zu empfangen.

7. Verfahren zum Betrieb eines Gerätes, umfassend:
Erzeugen eines gemeinschaftlichen Bereichs, wobei mindestens ein Benutzer Zugriff, durch den gemeinschaftlichen Bereich, auf einen ersten, ein Sportereignis bereitstellenden Server und einen zweiten, ein soziales Netzwerk bereitstellenden Server hat;
Authentifizieren (1304), durch den zweiten Server, unter Verwendung einer Steuereinheit (1212, 1234), einer Anmeldung für den mindestens einen Benutzer im gemeinschaftlichen Bereich;
Anzeigen (1306) eines Wettbewerbs, der mit dem von dem ersten Server im gemeinschaftlichen Bereich bereitgestellten Sportereignis verbunden ist;
Empfangen (1308) von mindestens einer mit dem Wettbewerb verbundenen Stimme von dem mindestens einen Benutzer im gemeinschaftlichen Bereich; und
Ausgeben (1310) eines Ergebnisses des Wettbewerbs basierend auf der mindestens einen Stimme.

8. Verfahren nach Anspruch 7, ferner umfassend das Anzeigen von sichtbaren, eine Schaltfläche zum dafür Stimmen und einen Schaltfläche zum dagegen Stimmen umfassende Schaltflächen.

9. Verfahren nach Anspruch 8, ferner umfassend das Anzeigen von Zählern für die Schaltfläche zum dafür Stimmen und die Schaltfläche zum dagegen Stimmen als Ergebnis der Wettbewerbe.

10. Verfahren nach Anspruch 7 wobei das Erzeugen des gemeinschaftlichen Bereichs das Erzeugen des gemeinschaftlichen Bereichs auf mehreren Anzeigegeräten (102, 106) umfasst.

11. Verfahren nach Anspruch 7, ferner umfassend das Ausführen eines Anwendungsprogramms zum Vernetzen von zwei oder mehr Anmeldungen des gemeinschaftlichen Bereichs.

12. Verfahren nach Anspruch 7 wobei das Anzeigen des Wettbewerbs Folgendes umfasst:
Anzeigen (1306) eines Wettbewerbs zum Anmelden eines Anspruchs durch einen anderen Benutzer im gemeinschaftlichen Bereich; und
Empfangen (1308) von Stimmen als Reaktion auf den Wettbewerb zur Parteiergreifung durch den anderen Benutzer im gemeinschaftlichen Bereich.

## Revendications

1. Un dispositif comprenant :
une interface d'affichage (1230, 1250) configurée pour créer un espace collaboratif, au moins un utilisateur accédant, par l'intermédiaire de l'espace de collaboration, à un premier serveur offrant un événement sportif et à un second serveur offrant un service de réseau social ;
une unité de commande (1212, 1234), couplée à l'interface d'affichage (1230, 1250), configurée pour :
authentifier (1304), par l'intermédiaire du second serveur, un identifiant de connexion pour le au moins un utilisateur dans l'espace collaboratif ;
afficher (1306) un défi lié à l'événement sportif offert par le premier serveur dans l'espace collaboratif ;
recevoir (1308) au moins un vote lié au défi en provenance du au moins un utilisateur dans l'espace collaboratif ;
et délivrer en sortie (1310) un résultat du défi sur la base du au moins un vote.

2. Dispositif selon la revendication 1, ladite unité de commande (1212, 1234) étant configurée pour commander l'interface d'affichage (1230, 1250) afin d'afficher des boutons visualisables comprenant un bouton de vote pour et un bouton de vote contre.

3. Dispositif selon la revendication 2, ladite unité de commande (1212, 1234) étant configurée pour commander l'interface d'affichage (1230, 1250) afin d'afficher des compteurs pour le bouton de vote pour et pour le bouton de vote contre à la suite du résultat des défis.

4. Dispositif selon la revendication 1, ledit espace collaboratif étant affiché sur de multiples dispositifs (102, 106).

5. Dispositif selon la revendication 1, ladite unité de commande (1212, 1234) étant configurée pour exécuter une application configurée pour mettre en réseau deux identifiants de connexion, ou plus, d'espace collaboratif.

6. Dispositif selon la revendication 1, ladite unité de commande (1212, 1234) étant configurée pour :
commander l'interface d'affichage (1230, 1250) pour afficher un défi qui est destiné à surveiller un pronostic par un autre utilisateur dans l'espace collaboratif ;
et recevoir des votes en vue de prendre le parti par l'autre utilisateur dans l'espace collaboratif.

7. Procédé de fonctionnement d'un dispositif comprenant :
la création d'un espace collaboratif, au moins un utilisateur accédant, par l'intermédiaire de l'espace collaboratif, à un premier serveur offrant un événement sportif et à un second serveur offrant un service de réseau social ;
l'authentification (1304), par l'intermédiaire du second serveur, à l'aide d'une unité de commande (1212, 1234), d'un identifiant de connexion pour le au moins un utilisateur dans l'espace collaboratif ;
l'affichage (1306) d'un défi lié à l'événement sportif offert par le premier serveur dans l'espace collaboratif ;
la réception (1308) d'au moins un vote lié au défi en provenance du au moins un utilisateur dans l'espace collaboratif ;
et la remise en sortie (1310) du résultat du défi sur la base d'au moins un vote.

8. Procédé selon la revendication 7, comprenant en outre l'affichage de boutons visibles comprenant un bouton de vote pour et un bouton de vote contre.

9. Procédé selon la revendication 8, comprenant en outre l'affichage de compteurs pour le bouton de vote pour et pour le bouton de vote contre à la suite des défis.

10. Procédé selon la revendication 7, ladite création de l'espace collaboratif comprenant la création de l'espace collaboratif sur de multiples dispositifs d'affichage (102, 106).

11. Procédé selon la revendication 7, comprenant en outre l'exécution d'une application pour la mise en réseau de deux identifiants de connexion, ou plus, de l'espace collaboratif.

12. Procédé selon la revendication 7, ledit affichage du défi comprenant : l'affichage (1306) d'un défi pour surveiller un pronostic d'un autre utilisateur dans l'espace collaboratif ;
et la réception (1308) des votes en réponse au défi en vue de prendre parti par l'autre utilisateur dans l'espace collaboratif.
